# EUROPÄISCHE PATENTSCHRIFT

(11) **EP 1 910 151 B1**
(45) Veröffentlichungstag und Bekanntmachung des Hinweises auf die Patenterteilung: **06.10.2010**
(21) Anmeldenummer: 06762541.8
(22) Anmeldetag: 12.07.2006
(51) Int. Cl.: B62D 5/06, B62D 5/093

(54) **ELEKTROHYDRAULISCHE LENKUNG**
ELECTROHYDRAULIC STEERING SYSTEM
DIRECTION HYDROELECTRIQUE

(30) Priorität: 27.07.2005 DE 102005035171
(43) Veröffentlichungstag der Anmeldung: 16.04.2008
(73) Patentinhaber: Bosch Rexroth AG, 70184 Stuttgart (DE)
(72) Erfinder: BIENER, Rainer, 97854 Steinfeld (DE)
(74) Vertreter: Thürer, Andreas
(86) Internationale Anmeldenummer: PCT/EP2006/006794
(87) Internationale Veröffentlichungsnummer: WO 2007/012399

(56) Entgegenhaltungen:
- DE-A1- 4 031 951
- DE-A1- 10 257 130
- PATENT ABSTRACTS OF JAPAN Bd. 010, Nr. 342 (M-536), 19. November 1986 (1986-11-19) & JP 61 143263 A (KAYABA IND CO LTD), 30. Juni 1986 (1986-06-30)

## Beschreibung

Die Erfindung betrifft eine elektrohydraulische Lenkung gemäß dem Oberbegriff des Patentanspruchs 1.

Elektrohydraulische Lenkungen sollen dem Bediener einer Arbeitsmaschine vornehmlich eine Komfortsteigerung bieten oder automatische Abläufe ermöglichen. Zu diesen Arbeitsmaschinen sind beispielsweise landwirtschaftliche Traktoren und Radlader zu zählen.

In der DE 102 57 130 A1 und in der DE 40 31 951 A1 ist jeweils eine elektrohydraulische Lenkung offenbart, bei der Druckmittel über ein Lenkaggregat in Abhängigkeit von einem über ein Bedienelement, beispielsweise ein Lenkrad oder einen Joystick eingestellten Lenkeinschlag zu einem Lenkmotor gefördert wird. Der Grundaufbau eines derartigen Lenkaggregats, auch Orbitrol genannt, ist beispielsweise in dem von der Anmelderin veröffentlichten Datenblatt RD 14 365/07.03 offenbart. Ein derartiges Lenkaggregat besteht im Wesentlichen aus einem handbetätigten.Servoventil in Drehschieberbauart, einem nach dem Gerotorprinzip arbeitenden Rotorsatz (Dosierpumpe) und den für den hydraulischen Lenkkreislauf erforderlichen Ventilen. Zur Lenkmengenverstärkung wird parallel zu dem über das Lenkaggregat zum Lenkmotor geförderten Druckmittelvolumenstrom über ein Lenkventil ein zusätzlicher Druckmittelvolumenstrom in den Lenkmotor eingespeist. Eine derartige elektrohydraulische Lenkung ermöglicht beispielsweise bei Traktoren eine Fahrgassenführung, bei der die Steuerung über externe Signale, beispielsweise Positionssignale eines GPS erfolgt, wobei die Lenkmenge alleine über das Lenkventil eingestellt wird. Bei einer sogenannten Verstärkerlenkung wird zusätzlich zum über das Lenkaggregat geförderten Druckmittelvolumenstrom über das Lenkventil eine definierte Zusatzdruckmittelmenge zum Lenkmotor gefördert, so dass sich für einen bestimmten Lenkwinkel an den Rädern der Arbeitsmaschine eine Reduktion der notwendigen Lenkradumdrehungen ergibt. Realisierbar ist auch eine Komfortlenkung, bei der zusätzlich zum Lenkrad weitere Bedienelemente, beispielsweise ein Joystick oder Potentiometer dem Bediener das Lenken der Arbeitsmaschine erleichtern.

Bei der elektrohydraulischen Lenkung nach der DE 40 31 951 A1 ist in Übereinstimmung mit dem Oberbegriff des Patentanspruchs 1 zusätzlich zum Lenkventil ein Sperrventil vorhanden, mit dem der über das Lenkventil führende Zusatzdruckmittelströmungspfad abgesperrt werden kann. Das Sperrventil nimmt eine den Zusatzdruckmittelströmungspfad absperrende Stellung ein, wenn das Bedienelement betätigt wird. Damit soll die Priorität einer Betätigung des Lenkaggregats gegenüber einer Betätigung des Lenkventils sichergestellt werden.

Da diese Arbeitsmaschinen vermehrt auch am öffentlichen Verkehr teilnehmen bzw. ihre zulässigen Fahrgeschwindigkeiten immer größer werden, ist besonderes Augenmerk auf eine sichere Funktion der elektrohydraulischen Lenkung zu richten.

So kann es beim Ausfall des Lenkventils - beispiels weise aufgrund eines Kolbenklemmers - vorkommen, dass dessen Regelkolben nicht mehr in seine Neutralstellung (Sperrposition) zurückgehen kann. In diesem Fall wird, obwohl der Bediener das Bedienelement in Richtung einer Verringerung des Lenkeinschlags betätigt hat, über das Proportionalventil weiter eine zusätzliche Druckmittelmenge zum Lenkmotor gefördert, so dass der Bediener keine oder eine sehr eingeschränkte Möglichkeit zum Gegenlenken hat - die Arbeitsmaschine wird unbeherrschbar. Es ist zwar möglich, über die beim Stand der Technik vorhandene Wegüberwachung des Lenkventils die Fehlfunktion anzuzeigen, vom Bediener können jedoch aktiv keine Gegenmaßnahmen getroffen werden, um den Lenkeinschlag zurückzunehmen.

Dem gegenüber liegt der Erfindung die Aufgabe zugrunde, die Betriebssicherheit einer elektrohydraulischen Lenkung zu erhöhen.

Diese Aufgabe wird durch eine elektrohydraulische Lenkung mit den Merkmalen des Patentanspruchs 1 gelöst.

Erfindungsgemäß ist die elektrohydraulische Lenkung mit einen über ein Bedienelement ansteuerbaren Lenkaggregat zur Druckmittelversorgung eines Lenkmotors ausgeführt. Dieser ist über einen Zusatzdruckmittelströmungspfad über ein Lenkventil mit einer Zusatzdruckmittelmenge versorgbar. Dabei ist erfindungsgemäß in diesem Zusatzdruckmittelströmungspfad ein Sperrventil angeordnet, das in eine Sperrstellung bringbar ist, um den Zusatzdruckmittelströmungspfad zum Lenkmotor zu sperren. Dieses Sperrventil ermöglicht es, im Fall einer Störung, beispielsweise eines Kolbenklemmers des Lenkventils den Zusatzdruckmittelströmungspfad zu sperren, so dass dem Bediener die Möglichkeit verbleibt, den Lenkeinschlag manuell über das Lenkaggregat zu korrigieren. Zum Erkennen einer Störung sind Aufnehmer vorhanden, mit denen die Stellung des Lenkventils und die Stellung des Sperrventils (29) erfasst werden können. Von einem Steuergerät werden die von den Aufnehmern erzeugten Signale ausgewertet werden. Das Steuergerät ist derart ausgelegt, dass bei Ausfall oder Fehlfunktion eines der Ventile das jeweils andere Ventil in seine Sperrstellung verstellbar ist. D. h., in dem Fall, in dem sich das Sperrventil nicht seine vorbestimmte Position einstellt, wird das Lenkventil in eine Sperrstellung verstellt. Umgekehrt wird dann, wenn das Lenkventil nicht seine Sollposition einnimmt, das Sperrventil in seine Sperrstellung gebracht, um den Zusatzdruckmittelströmungspfad zum Lenkmotor abzusperren. Dadurch bleibt die Arbeitsmaschine auch beim Ausfall des Lenkventils beherrschbar.

Bei einem bevorzugten Ausführungsbeispiel ist dem Bedienelement zumindest ein Sensor zur Erfassung des eingestellten Sollwerts zugeordnet, wobei die Ansteuerung des Lenkventils und des Sperrventils in Abhängigkeit von diesem Sollwert über das Steuergerät erfolgt. Die Einstellung des im Zusatzdruckmittelströmungspfad angeordneten Lenkventils und des Sperrventils kann somit in Abhängigkeit von dem am Bedienelement eingestellten Sollwert erfolgen (Verstärkerlenkung).
Bei einem Ausführungsbeispiel hat das Lenkventil entsprechend eine Sperrstellung. Es ist des Weiteren in erste Arbeitspositionen verstellbar, in denen ein erster Arbeitsanschluss des Lenkmotors mit einer Druckmittelquelle verbunden ist. Des Weiteren ist es in zweite Arbeitspositionen verstellbar in denen ein zweiter Arbeitsanschluss des Lenkmotors mit der Druckmittelquelle verbunden ist.

Das Sperrventil wird vorzugsweise als Schaltventil ausgeführt.

Bei einem bevorzugten Ausführungsbeispiel der Erfindung ist das Sperrventil als 2/4-Wegeschaltventil ausgeführt, das in seiner Sperrstellung den Zusatzdruckmittelströmungspfad zwischen der Druckmittelquelle und dem Lenkmotor und zwischen einer Druckmittelsenke und dem Lenkmotor absperrt und in seiner Schaltposition diesen Druckmittelströmungspfad öffnet.

Dabei wird es bevorzugt, wenn das Lenkventil in den ersten Arbeitspositionen den zweiten Arbeitsanschluss mit der Druckmittelsenke und in den zweiten Arbeitspositionen den ersten Arbeitsanschluss mit der Druckmittelsenke verbindet. Bei diesem Ausführungsbeispiel wird die Zusatzdruckmittelmenge von der Druckmittelquelle zum Lenkmotor und von diesem zurück zur Druckmittelsenke über das Lenkventil und das Sperrventil geführt.

Dabei ist es besonders bevorzugt, wenn das Sperrventil im Druckmittelströmungspfad zwischen dem Lenkventil und dem Lenkmotor angeordnet ist.

Bei einer alternativen Lösung wird über das Sperrventil und das Lenkventil lediglich der Zusatzdruckmittelstrom von der Druckmittelquelle zum Lenkmotor geführt, während der Ablauf des Druckmittels über das Lenkaggregat erfolgt. In diesem Fall können das Sperrventil und das Lenkventil einfacher als beim vorbeschriebenen Ausführungsbeispiel ausgeführt sein.

In dem Fall, in dem keine Leckage über dem elektrohydraulischen Teil der Lenkung zulässig ist, kann das Schaltventil als Sitzventil ausgeführt sein.

Der Aufbau der elektrohydraulischen Lenkung ist besonders einfach, wenn der dem Sperrventil zugeordnete Aufnehmer ein Endlagenschalter und/oder der dem stetig verstellbaren Lenkventil zugeordnete Aufnehmer ein Wegaufnehmer ist, so dass der Ausfall des Sperrventils oder des Lenkventils zuverlässig erkennbar ist. Dabei kann nicht nur die Position des Lenkventils sondern auch dessen Stellgeschwindigkeit überwacht werden, um beispielsweise eine Störung des Lenkventils frühzeitig zu erkennen.

Als Druckmittelquelle zur Versorgung des Lenkaggregats und/oder zur Bereitstellung der Zusatzdruckmittelmenge kann eine Konstantpumpe oder eine Verstellpumpe verwendet werden.

Sonstige vorteilhafte Weiterbildungen der Erfindung sind Gegenstand weiterer Unteransprüche.

Im folgenden werden bevorzugte Ausführungsbeispiele der Erfindung anhand schematischer Zeichnungen näher erläutert. Es zeigen:
Figur 1 ein Schaltschema eines ersten Ausführungsbeispiels einer elektrohydraulischen Lenkung und
Figur 2 ein Schaltschema eines weiteren, vereinfachten Ausführungsbeispiels.

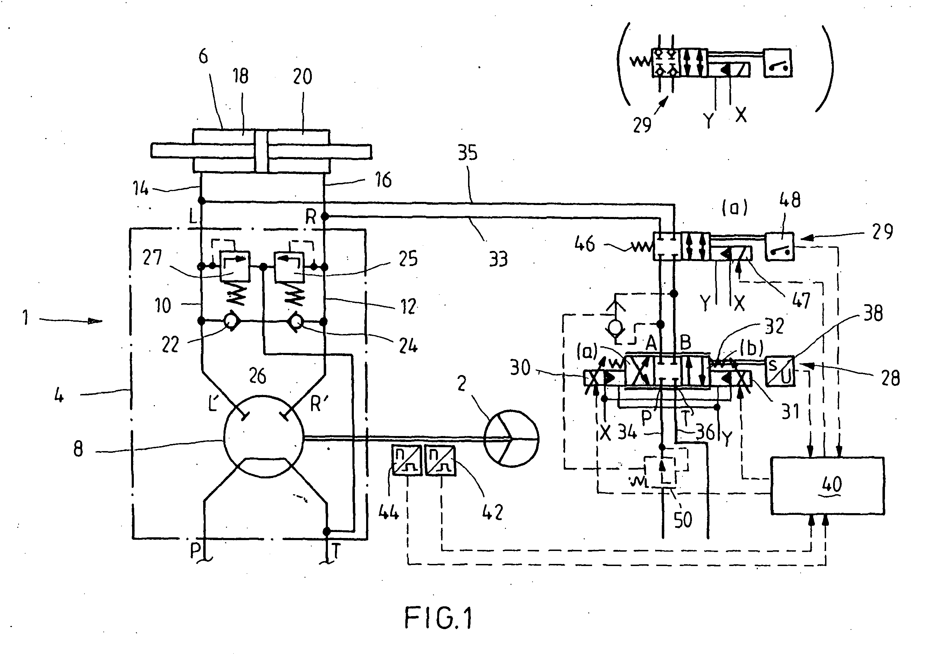

Figur 1 zeigt ein Schaltschema eines ersten Ausführungsbeispiels einer elektrohydraulischen Lenkung 1. Diese besteht im Wesentlichen aus einem über ein Bedienelement, beispielsweise ein Lenkrad 2 betätigbaren Lenkaggregat 4, über das ein Lenkmotor, beim dargestellten Ausführungsbeispiel ein als Gleichgangzylinder ausgeführter Lenkzylinder 6, mit einer Lenkmenge versorgbar ist, um einen Lenkeinschlag einer Arbeitsmaschine, beispielsweise eines Radladers einzustellen. Das Lenkaggregat 4 besteht im Wesentlichen aus einem Rotorsatz (Dosierpumpe) und einem handbetätigten Servoventil in Drehschieberbauart. Derartige Lenkaggregate (Orbitrol) sind in dem eingangs genannten Datenblatt RD 14 365/57.03 ausführlich beschrieben, so dass auf eine detaillierte Beschreibung des Aufbaus des handbetätigten Servoventils und der Dosierpumpe, die nach dem Gerotorprinzip arbeitet verzichtet werden kann. Die Baugröße der Dosierpumpe ist beispielsweise so gewählt, dass mit 3 bis 5 Lenkradumdrehungen vom Anschlag zum Anschlag der Lenkung gelenkt werden kann. Bei dem in Figur 1 dargestellten Schaltbild sind das handbetätigte Servoventil und die Dosierpumpe durch das kreisförmige Symbol 8 für ein Orbitrol angedeutet. Das Lenkaggregat 1 hat einen Druckanschluss P und einen Tankanschluss T, die an eine Druckmittelquelle, beispielsweise eine Konstant- oder Verstellpumpe bzw. eine Druckmittelsenke, vorzugsweise einen Tank angeschlossen sind. Die beiden Arbeitsanschlüsse L' und R' der Einheit aus Dosierpumpe und Servoventil 8 sind über Arbeitskanäle 10, 12 und Steueranschlüsse L, R des Lenkaggregat 4 sowie Arbeitsleitungen 14, 16 mit Ringräumen 18 bzw. 20 des Lenkzylinders. 6 verbunden, so dass bei Betätigung des mechanisch mit der Dosierpumpe verbundenen Lenkrads 2 in Abhängigkeit von dessen Drehrichtung Druckmittel in den Ringraum 18 oder 20 gefördert und entsprechend Druckmittel aus dem anderen Ringraum 20 bzw. 18 zum Tank T hin abströmt.

Zwischen den beiden Arbeitsleitungen 10, 12 sind in bekannter Weise zwei Nachsaugventile 22, 24 sowie zwei Druckbegrenzungsventile 25, 27 angeordnet, wobei der Ausgang der beiden Druckbegrenzungsventile 25, 27 und der Eingang der beiden Nachsaugventile 22, 24 über eine Tankleitung 26 mit dem Tankanschluss T verbunden sind. Über die beiden Druckbegrenzungsventile 25, 27 (auch Schockventile genannt) werden die beiden Anschlüsse L, R zum Lenkzylinder 6 abgesichert. Spricht eines der Druckbegrenzungsventile 25, 27 an, so wird das Druckmittel über das Nachsaugventil auf der Niederdruckseite der Gegenseite zugeführt. Über die beiden Nachsaugventile 22, 24 kann Druckmittel aus dem Tank nachgesaugt werden.

In dem Fall, in dem die an den Anschluss P angeschlossene Pumpe ausfällt, arbeitet das Lenkaggregat 4 als über das Lenkrad 2 betätigte Handpumpe, so das die Arbeitsmaschine ohne Servounterstützung gelenkt wird. Der von Hand erreichbare Druck ist dabei abhängig von der Baugröße des Rotorbausatzes der Dosierpumpe und der über das Lenkrad aufbringbaren Kraft. Je kleiner der Rotorsatz ist, desto größer ist der manuell aufbaubare Druck.

Mit dem in Figur 1 dargestellten Ausführungsbeispiel wird die Funktion einer automatischen Lenkung, einer Verstärkerlenkung oder einer Komfortlenkung durch Einspeisung einer (zusätzlichen) Lenkmenge, im folgenden Zusatzdruckmittelmenge genannt, ermöglicht. Unter dem Begriff "Zusatzdruckmittelmenge" wird allgemein eine Druckmittelmenge zur Verstellung des Lenkzylinders 6 verstanden, wobei diese nicht notwendiger Weise zu einem Druckmittelvolumenstrom des Lenkaggregats hinzugefügt werden muss, so dass der Lenkzylinder 6 auch nur durch die Zusatzdruckmittelmenge verstellbar ist. Diese wird über eine Ventilanordnung, im Wesentlichen bestehend aus einem stetig verstellbaren Lenkventil 28 und einem 4/2-Wegeschaltventil 29 eingestellt. Das Lenkventil 28 ist mit einer elektrohydraulischen Vorsteuerung mit zwei Vorsteuerventilen versehen, wobei jeweils ein Vorsteuerventil über einen als Proportionalmagneten ausgebildeten Vorsteuermagneten 30, 31 verstellbar ist. Das Lenkventil 28 ist über eine Zentrierfederanordnung 32 in eine Grundposition vorgespannt, in der ein Druckanschluss P und ein Tankanschluss T gegenüber zwei Arbeitsanschlüssen A, B abgesperrt sind, und in Positionen (a) oder (b) verstellbar. Die beiden Arbeitsanschlüsse A, B sind über Zusatzdruckmittelleitungen 33 bzw. 35 mit der Arbeitsleitung 16 bzw. der Arbeitsleitung 14 verbunden. Die beiden Anschlüsse P, T des Lenkventils 28 sind über eine Pumpenleitung 34 bzw. eine Ablaufleitung 36 mit der Druckmittelquelle bzw. der Druckmittelsenke (Konstant-/Verstellpumpe bzw. Tank) verbunden. Die Vorsteuerung des Lenkventils 28 kann über einen Steueranschluss X mit einem Steuerdruck beaufschlagt und über einen Steueranschluss Y von Steuerdruck entlastet werden. Das Steueröl wird zum Tank abgeführt. Die Verstellung des Ventilschiebers wird über einen Wegaufnehmer 38 erfasst. Das Ausgangssignal des Wegaufnehmers wird von einem Steuergerät 40 ausgewertet.

Die Ansteuerung der Vorsteuermagneten 30, 31 erfolgt im Wesentlichen über dieses Steuergerät 40 in Abhängigkeit vom Signal zweier am Lenkrad 2 angeordneter Lenksensoren 42, 44, über die die Lenkgeschwindigkeit und die Lenkrichtung - ähnlich wie bei einer Computermaus - erfassbar sind. Aus diesen Sensorsignalen und der gewünschten Übersetzung aufgrund der Zusatzdruckmittelmenge errechnet das Steuergerät 40 die Druckmittelmenge, die über die Wegeventilachse zugemessen werden muss. Demzufolge sind die beiden Lenksensoren 42, 44 zumindest bei einer Verstärkerlenkung vorteilhaft.

Bei dem dargestellten Ausführungsbeispiel ist das Schaltventil 29 im Druckmittelströmungspfad zwischen dem Lenkventil 28 und dem Lenkzylinder 6 angeordnet. Ein Kolben des Schaltventils 29 ist über eine Feder 46 in seine dargestellte Sperrposition vorgespannt, in der die Druckmittelverbindung zwischen den Arbeitsanschlüssen A, B des Lenkventils 28 und dem Lenkzylinder 6 abgesperrt ist. Durch Ansteuerung einer elektrohydraulischen Vorsteuerung des Schaltventils 29 kann dieses in eine Durchgangsposition (a) umgeschaltet werden, in der die Druckmittelverbindung zwischen den Arbeitsanschlüssen A, B des Lenkventils 28 und den Ringräumen 20 bzw. 18 des Lenkzylinders 6 aufgesteuert ist. Die Vorsteuerung ist wiederum mit einem Steueranschluss X und einem Steueröltankanschluss Y ausgeführt, wobei durch Umschalten des Schaltmagnets 47 der Kolben des Schaltventils 29 mit dem Steuerdruck am Steueranschluss X beaufschlagbar ist, um diesen in seine Öffnungsstellung zu bringen. Diese Schaltposition wird mittels eines Endlagenschalters 48 überwacht. Die Betätigung des Schaltmagneten 47 erfolgt über ein vom Steuergerät 40 abgegebenes Signal. Das vom Endlagenschalter 48 erzeugte Signal wird ebenfalls vom Steuergerät 40 ausgewertet.

Bei dem dargestellten Ausführungsbeispiel sind der Wegaufnehmer 38 und der Endlagenschalter 48 im Wesentlichen dazu vorgesehen, um das Steuergerät 40 über die jeweilige Kolbenstellung des Ventils zu informieren. Bei Fehlfunktion einer der Achsen (Schaltventilachse, Lenkventilachse) wird über das Steuergerät 40 die Abschaltung der jeweils anderen Achse herbeigeführt und der Zusatzdruckmittelströmungspfad abgesperrt, so dass dem Bediener die Möglichkeit verbleibt, die Arbeitsmaschine allein über das Lenkaggregat 4 zu steuern.

Im normalen Betrieb beim Starten der Arbeitsmaschine wird das Schaltventil 29 in seine Durchgangsstellung umgeschaltet, so dass bei Betätigung des Lenkrads 2 in Abhängigkeit vom Lenkeinschlag und der Lenkgeschwindigkeit über die Lenksensoren 42, 44 ein Sollwertsignal an das Steuergerät 40 abgegeben wird. Dieses berechnet in Abhängigkeit von diesen Signalen und der gewünschten Übersetzung eine Zusatzdruckmittelmenge und gibt ein entsprechendes Signal an die Vorsteuerung des Lenkventils 28 ab. Bei einer Verstellung des Lenkrads nach links (L) wird entsprechend Vorsteuermagnet 30 über das Steuergerät 40 angesteuert, um den Ventilschieber des Lenkventils 28 nach rechts (Figur 1) in eine Position (a) zu verschieben, so dass dessen Druckanschluss P mit dem Arbeitsanschluss B und der Arbeitsanschluss A mit dem Tankanschluss T verbunden ist und entsprechend eine Zusatzdruckmittelmenge in den Ringraum 18 des Lenkzylinders 6 geführt und eine entsprechende Druckmittelmenge aus dem Ringraum 20 über das Schaltventil 29 und dem Arbeitsanschluss A sowie dem Tankanschluss T des Lenkventils 28 zum Tank T zurückgeführt wird. Die Arbeitsmaschine wird mit einer Verstärkerlenkung gesteuert, so dass sich für einen bestimmten Lenkwinkel an den Rädern eine Reduktion der notwendigen Lenkradumdrehungen ergibt. So kann beispielsweise bei einem Traktor am Feldende durch eine Reduktion der Lenkradumdrehungen dem Bediener beim Wenden der Maschine Arbeit abgenommen werden.

Über das stetig verstellbare Lenkventil 28 und das Schaltventil 29 lässt sich die Arbeitsmaschine auch ohne Betätigung des Lenkrads 2 beispielsweise über ein Potentiometer oder einen Joystick lenken - diese Betriebsart (Komfortlenkung) ist insbesondere bei einer Rückfahreinrichtung vorteilhaft.

Die automatische Betriebsweise kann bei der eingangs beschriebenen Fahrgassenführung eingeschaltet werden, bei der die Steuerung der Arbeitsmaschine über GPS-Signale oder sonstige externe Signale erfolgt.

In dem Fall, in dem entweder die Schaltventilachse 29 oder die Lenkventilachse 28 ausfällt, wird über das Steuergerät 40 die jeweils andere Ventilachse abgeschaltet, d. h., in Sperrpositon gebracht. Eine derartige Störung kann bei dem stetig verstellbaren Wegeventil 28 beispielsweise durch Ausfall eines oder beider Proportionalmagneten 30, 31, durch Ausfall des Wegaufnehmers 38 oder durch einen Kolbenklemmer auftreten. Beim Schaltventil 29 wird auf einen Ausfall erkannt, wenn der Endlagenschalter 48 defekt ist, der Schaltmagnet ausfällt oder der Kolben des Schaltventils in der Nichtneutralstellung (Durchgangsstellung) klemmt. Die Sensorik an den beiden Ventilachsen ist so gewählt, dass das Steuergerät 40 bereits beim Einschalten der Arbeitsmaschine und damit vor einer ungewollten Bewegung, mittels einer Plausibilitätsprüfung testen kann, ob beide Ventilachsen 28, 29 in Ordnung sind. Erst nach Durchführung dieser Plausibilitätsprüfung wird die elektrohydraulische Lenkung zugeschaltet. Wäre beispielsweise anstelle des Endlagenschalters 48 der Schaltventilachse 29 nur ein Wegsensor am Lenkzylinder 6 angeordnet, dann würde die Fehlfunktion einer Ventilachse erst nach einer Bewegung der gelenkten Räder erkannt werden - eine Personengefährdung könnte mit einem derartigen System nicht ausgeschlossen werden.

Anstelle des Endlagenschalters 48 in Figur 1 könnte auch ein Analogsensor eingesetzt werden. Neben der Überwachung der Kolbenstellung ist bei beiden Ventilachsen 28, 29 auch zusätzlich eine Überwachung der Schalt-/Verstellzeiten einsetzbar, so dass durch Auswertung dieser Zeiten auf einen anbahnenden Ausfall der jeweiligen Achse, beispielsweise durch Verschmutzung, geschlossen werden kann.

Bei dem vorbeschriebenen Ausführungsbeispiel wird die Position und damit der Durchflussquerschnitt des stetig verstellbaren Lenkventils 28 über den Wegaufnehmer 38 erfasst. Aus dem Durchflussquerschnitt ergibt sich, wenn man die Druckdifferenz über das Lenkventil 28 konstant hält, die zusätzliche Druckmittelmenge. Die Druckdifferenz kann, wie in Figur 1 gestrichelt angedeutet ist, mit einer Druckwaage konstant gehalten werden. Diese Druckwaage 50 ist in die Pumpenleitung 54 geschaltet und in Öffnungsrichtung von der Kraft einer Feder sowie dem höheren der beiden Drücke in den Arbeitsanschlüssen A und B des Lenkventils 28 und in Schließrichtung vom Druck am Pumpenanschluss P des Lenkventils 28 beaufschlagt. Alternativ könnte der vom Lenkwiderstand und vom Pumpendruck abhängige Druckabfall über das Lenkventil auch über zwei Drucksensoren erfasst und der Durchflussquerschnitt entsprechend der gewünschten Zusatzdruckmittelmenge eingestellt werden.

Wie vorstehend ausgeführt, kann an das elektronische Steuergerät 40 auch ein alternatives Bedienelement, wie beispielsweise ein Joystick oder ein Potentiometer angeschlossen werden. Für die automatische Steuerung ist die Anbindung externer Signalquellen denkbar, so dass neben der vorbeschriebenen konventionellen Lenkung auch die Automatikfunktion dargestellt werden kann.

Für Anwendungen, bei denen keine Leckage über den elektrohydraulischen Teil der Lenkung zulässig ist, kann die Schaltventilachse 29 auch als Sitzventil ausgeführt sein. Diese Variante ist in Figur 1 in Klammern dargestellt.

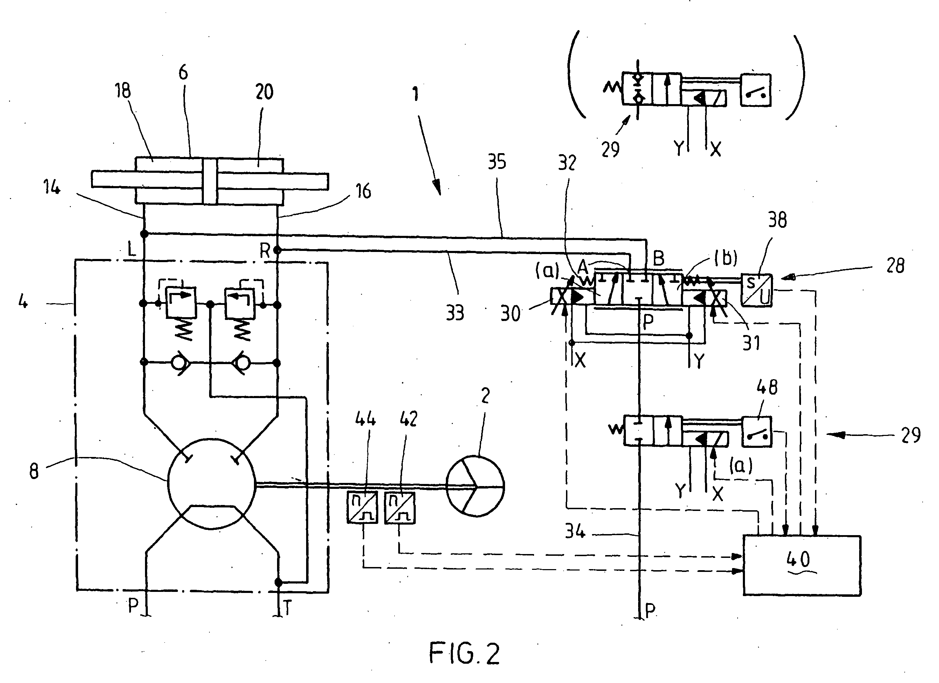

Bei dem vorbeschriebenen Ausführungsbeispiel werden die zum Lenkzylinder 6 geführte Zusatzdruckmittelmenge und die von diesem abströmende Zusatzdruckmittelmenge über die beiden Ventilachsen 28, 29 geführt. Bei einem in Figur 2 dargestellten vereinfachten Ausführungsbeispiel wird die Zusatzdruckmittelmenge über die beiden Ventilachsen 18, 20 geführt, während der gesamte, vom Lenkzylinder 6 abströmende Druckmittelvolumenstrom über das Lenkaggregat 4 zum Tank zurückgeführt wird. Bei einer derartigen vereinfachten Variante ist eine Automatikfunktion nicht möglich, da eine manuelle Verstellung des Lenkaggregat erforderlich ist.

Bei dem in Figur 2 dargestellten Ausführungsbeispiel ist der Grundaufbau des Lenkaggregats 4 und dessen Anschluss an den Lenkzylinder 6 gleich wie beim vorbeschriebenen Ausführungsbeispiel, so dass diesbezüglich der Einfachheit halber auf die entsprechenden Ausführungen in Figur 1 verwiesen wird.

Das Lenkventil 28 ist bei diesem Ausführungsbeispiel mit drei Anschlüssen P, A, B ausgeführt, wobei die beiden Arbeitsanschlüsse A, B an die Zusatzdruckmittelleitungen 33 bzw. 35 angeschlossen sind. Das stetig verstellbare Lenkventil 28 ist wiederum mit einer elektrohydraulischen Vorsteuerung ausgeführt und über eine Zentrierfederanordnung 32 in eine Grundposition vorgespannt, in der die beiden Arbeitsanschlüsse A, B und der Druckanschluss P abgesperrt sind. Die Ansteuerung der Proportionalmagnete 30, 31 der Vorsteuerung erfolgt über von dem Steuergerät 40 abgegebene Signale, wobei die Ventilschieberposition über den Wegaufnehmer 38 erfasst wird. Der Druckanschluss P des Lenkventils 28 ist über die Pumpenleitung 34 mit der Druckmittelquelle (Konstant-, Verstellpumpe) verbunden. In dieser Druckleitung 34 ist das Schaltventil 29 angeordnet, das bei diesem Ausführungsbeispiel als 2/2-Wegeventil ausgeführt ist. Dieses lässt sich durch Betätigen des Schaltmagnets seiner Vorsteuerung in seine Durchgangsposition (a) bringen. Das Umschalten wird wiederum über den Endlagenschalter 48 erfasst.

Bei einem Lenkradeinschlag nach rechts wird über das Steuergerät 40 der Proportionalmagnet 31 über das Steuergerät 40 bestromt, so dass der Kolben des Lenkventils 28 in der Darstellung gemäß Figur 2 nach links verschoben wird und der Druckanschluss P mit dem Arbeitsanschluss A verbunden ist. Die Zusatzdruckmittelmenge wird dann über das aufgesteuerte Schaltventil 29 und das Lenkventil 28 und die Zusatzdruckmittelleitung 33 in den rechten Ringraum 20 gefördert und das aus dem linken Ringraum 18 verdrängte Druckmittel über die Arbeitsleitung 14 und das Lenkaggregat 4 zum Tank T zurückgefördert. Die Einstellung des Lenkventils 28 erfolgt wiederum in Abhängigkeit vom Signal der Lenksensoren 42, 44. Über die Aufnehmer 38, 48 erfolgt lediglich die Überwachung der Einstellung des Lenkventils 28 bzw. des Schaltventils 29. In dem Fall, in dem das Steuergerät 40 eine Störung einer der Ventilachsen 28, 29 erkennt, wird die jeweils andere in ihre Sperrposition verschoben, so dass der Zusatzdruckmittelströmungspfad abgesperrt ist und die Arbeitsmaschine manuell über das Lenkrad 2 lenkbar bleibt.

Auch bei dieser Variante kann das Schaltventil 29 alternativ als Sitzventil ausgeführt sein.

Bei den vorbeschriebenen Ausführungsbeispielen sind vorgesteuerte Ventilachsen vorgesehen - bei kleineren Volumenströmen können jedoch auch direktgesteuerte Achsen eingesetzt werden.

Offenbart ist eine elektrohydraulische Lenkung mit einem über ein Bedienelement ansteuerbaren Lenkaggregat zur Versorgung eines Lenkmotors mit Druckmittel. In Abhängigkeit von der Betätigung des Bedienelementes oder in Abhängigkeit von einem externen Signal kann der Lenkmotor über ein Lenkventil mit einer Zusatzdruckmittelmenge versorgt werden. Erfindungsgemäß ist im Zusatzdruckmittelströmungspfad ein Sperrventil angeordnet, das in eine Sperrstellung bringbar ist, um den Zusatzdruckmittelströmungspfad zum Lenkmotor zu sperren.

### Bezugszeichenliste:

- 1: elektrohydraulische Lenkung
- 2: Lenkrad
- 4: Lenkaggregat
- 6: Lenkzylinder
- 8: Servoventil / Dosierpumpe
- 10: Arbeitskanal
- 12: Arbeitskanal
- 14: Arbeitsleitung
- 16: Arbeitsleitung
- 18: Ringraum
- 20: Ringraum
- 22: Nachsaugventil
- 24: Nachsaugventil
- 25: Druckbegrenzungsventil
- 26: Tankleitung
- 27: Druckbegrenzungsventil
- 28: stetig verstellbares Lenkventil
- 29: Schaltventil
- 30: Vorsteuermagnet
- 31: Vorsteuermagnet
- 32: Zentrierfederanordnung
- 33: Zusatzdruckmittelleitung
- 34: Pumpenleitung
- 35: Zusatzdruckmittelleitung
- 36: Ablaufleitung
- 38: Wegaufnehmer
- 40: Steuergerät
- 42: Lenksensor
- 44: Lenksensor
- 46: Feder
- 47: Schaltmagnet
- 48: Endlagenschalter
- 50: Druckwaage

## Patentansprüche

1. Elektrohydraulische Lenkung mit einem über ein Bedienelement (2) ansteuerbaren Lenkaggregat (4) zur Versorgung eines Lenkmotors (6) mit Druckmittel, der über ein in einen Zusatzdruckmittelströmungspfad zwischen einer Druckmittelquelle (P) und dem Lenkmotor (6) angeordnetes, stetig verstellbares und in Abhängigkeit von der Betätigung des Bedienelementes (2) oder in Abhängigkeit von einem externen Signal ansteuerbares Lenkventil (28) mit einer Zusatzdruckmittelmenge versorgbar ist, und mit einem im Zusatzdruckmittelströmungspfad angeordneten Sperrventil (29), das in eine Sperrstellung bringbar ist, um den Zusatzdruckmittelströmungspfad zum Lenkmotor (6) zu sperren, **gekennzeichnet durch** Aufnehmer (38, 48) zur Erfassung der Lenkventileinstellung und/oder der Sperrventileinstellung und **durch** ein Steuergerät (40), von dem das von einem Aufnehmer (38, 48) erzeugte Signal ausgewertet wird und das derart ausgelegt ist, dass bei Ausfall oder Fehlfunktion eines der Ventile (28, 29) das jeweils andere Ventil (29, 28) in seine Sperrstellung verstellbar ist.

2. Lenkung nach Patentanspruch 1, wobei zumindest ein Sensor (42, 44) zur Erfassung des mit dem Bedienelement (2) eingestellten Sollwerts vorhanden ist und das Steuergerät (40) das Lenkventil (28) und das Sperrventil (29) in Abhängigkeit von dem Sollwert ansteuert.

3. Lenkung nach Patentanspruch 1 oder 2, wobei das Lenkventil (28) eine Sperrstellung hat, sowie erste Arbeitspositionen (a), in denen ein erster Arbeitsanschluss (B) mit der Druckmittelquelle (P) sowie zweite Arbeitspositionen (b) in denen ein zweiter Arbeitsanschluss (A) mit der Druckmittelquelle (P) verbunden ist.

4. Lenkung nach einem der vorhergehenden Patentansprüche, wobei das Sperrventil ein Schaltventil (29) ist.

5. Lenkung nach Patentanspruch 4, wobei das Schaltventil ein 4/2-Wegeschaltventil (29) ist, das in seiner Sperrstellung den Zusatzdruckmittelströmungspfad zwischen der Druckmittelquelle (P) und dem Lenkmotor (6) und zwischen einer Druckmittelsenke und dem Lenkmotor (6) absperrt und in seiner Schaltposition diesen Zusatzdruckmittelströmungspfad öffnet.

6. Lenkung nach Patentanspruch 3 und 5, wobei das Lenkventil (28) in den ersten Arbeitspositionen (a) den zweiten Arbeitsanschluss (A) mit der Druckmittelsenke (T) und in den zweiten Arbeitspositionen (b) den ersten Arbeitsanschluss (B) mit der Druckmittelsenke verbindet.

7. Lenkung nach Patentanspruch 5 oder 6, wobei das Schaltventil (29) zwischen dem Lenkventil (28) und dem Lenkmotor (6) angeordnet ist.

8. Lenkung nach Patentanspruch 3 und 4, wobei das Sperrventil ein 2/2-Wegeschaltventil (29) ist, das in seiner Sperrstellung den Zusatzdruckmittelströmungspfad zwischen der Druckmittelquelle (P) und dem Lenkmotor (6) sperrt und in seiner Schaltstellung (a) aufsteuert, wobei das vom Lenkmotor (6) abströmende Druckmittel über das Lenkaggregat (4) zu einer Druckmittelsenke (T) abläuft.

9. Lenkung nach einem der vorhergehenden Patentansprüche, wobei das Sperrventil (29) ein Sitzventil ist.

10. Lenkung nach einem vorhergehenden Patentanspruch, wobei der Aufnehmer des Sperrventils (29) ein Endlagenschalter (48).

11. Lenkung nach einem vorhergehenden Patentanspruch, wobei der Aufnehmer des Lenkventils (28) ein Wegaufnehmer (38) ist.

## Claims

1. Electrohydraulic steering system having a steering assembly (4) which can be actuated via an operating element (2) for supplying a steering motor (6) with pressure medium, which steering motor (6) can be supplied with an additional pressure-medium quantity via a steering valve (28) which is arranged in an additional pressure-medium flow path between a pressure-medium source (P) and the steering motor (6), can be adjusted continuously and can be actuated as a function of the actuation of the operating element (2) or as a function of an external signal, and having a shut-off valve (29) which is arranged in the additional pressure-medium flow path and can be moved into a shut position, in order to shut the additional pressure-medium flow path to the steering motor (6), **characterized by** sensors (38, 48) for detecting the steering-valve setting and/or the shut-off-valve setting, and by a control unit (40), by which the signal which is generated by a sensor (38, 48) is evaluated and which is designed in such a way that, in the case of a failure or malfunction of one of the valves (28, 29), the respectively other valve (29, 28) can be moved into its shut position.

2. Steering system according to Patent Claim 1, there being at least one sensor (42, 44) for detecting the setpoint value which is set by way of the operating element (2), and the control unit (40) actuating the steering valve (28) and the shut-off valve (29) as a function of the setpoint value.

3. Steering system according to Patent Claim 1 or 2, the steering valve (28) having a shut position, and first working positions (a), in which a first working connection (B) is connected to the pressure-medium source (P), and second working positions (b), in which a second working connection (A) is connected to the pressure-medium source (P).

4. Steering system according to one of the preceding patent claims, the shut-off valve being a control valve (29).

5. Steering system according to Patent Claim 4, the control valve being a 4/2-way control valve (29) which, in its shut position, shuts off the additional pressure-medium flow path between the pressure-medium source (P) and the steering motor (6) and between a pressure-medium sink and the steering motor (6) and, in its control position, opens the said additional pressure-medium flow path.

6. Steering system according to Patent Claims 3 and 5, the steering valve (28) connecting the second working connection (A) to the pressure-medium sink (T) in the first working positions (a) and connecting the first working connection (B) to the pressure-medium sink in the second working positions (b).

7. Steering system according to Patent Claim 5 or 6, the control valve (29) being arranged between the steering valve (28) and the steering motor (6).

8. Steering system according to Patent Claims 3 and 4, the shut-off valve being a 2/2-way control valve (29) which, in its shut position, shuts off the additional pressure-medium flow path between the pressure-medium source (P) and the steering motor (6) and, in its control position (a), opens the said additional pressure-medium flow path, the pressure medium which flows away from the steering motor (6) running away via the steering assembly (4) to a pressure-medium sink (T).

9. Steering system according to one of the preceding patent claims, the shut-off valve (29) being a seat valve.

10. Steering system according to a preceding patent claim, the sensor of the shut-off valve (29) being a limit-position switch (48).

11. Steering system according to a preceding patent claim, the sensor of the steering valve (28) being a displacement transducer (38).

## Revendications

1. Direction hydroélectrique comprenant une unité de direction (4) commandable par le biais d'un élément de commande (2) pour l'alimentation d'un moteur de direction (6) en fluide sous pression, qui peut être alimenté en une quantité de fluide sous pression supplémentaire par le biais d'une soupape de direction (28) disposée dans un chemin d'écoulement de fluide sous pression supplémentaire entre une source de fluide sous pression (P) et le moteur de direction (6), réglable en continu et commandable en fonction de l'actionnement de l'élément de commande (2) ou en fonction d'un signal extérieur, et comprenant une soupape de blocage (29) disposée dans le chemin d'écoulement de fluide sous pression supplémentaire, qui peut être amenée dans une position de blocage afin de bloquer le chemin d'écoulement de fluide sous pression supplémentaire allant au moteur de direction (6), **caractérisée par** des dispositifs d'enregistrement (38, 48) pour détecter l'ajustement de la soupape de direction et/ou de la soupape de blocage et par un appareil de commande (40) qui analyse le signal produit par un dispositif d'enregistrement (38, 48) et qui est conçu de telle sorte que lors d'une panne ou d'une défaillance du fonctionnement d'une des soupapes (28, 29), l'autre soupape respective (29, 28) puisse être déplacée dans sa position de blocage.

2. Direction selon la revendication 1, dans laquelle au moins un capteur (42, 44) est prévu pour détecter la valeur de consigne ajustée avec l'élément de commande (2) et l'appareil de commande (40) commande la soupape de direction (28) et la soupape de blocage (29) en fonction de la valeur de consigne.

3. Direction selon la revendication 1 ou 2, dans laquelle la soupape de direction (28) a une position de blocage, ainsi que des premières positions de travail (a), dans lesquelles un premier raccordement de travail (B) est connecté à la source de fluide sous pression (P) ainsi que des deuxièmes positions de travail (b) dans lesquelles un deuxième raccordement de travail (A) est connecté à la source de fluide sous pression (P).

4. Direction selon l'une quelconque des revendications précédentes, dans laquelle la soupape de blocage est une soupape de commutation (29).

5. Direction selon la revendication 4, dans laquelle la soupape de commutation est une soupape de commutation à 4/2 voies (29), qui, dans sa position de blocage, bloque le chemin d'écoulement de fluide sous pression supplémentaire entre la source de fluide sous pression (P) et le moteur de direction (6) et entre un carter de fluide sous pression et le moteur de direction (6), et dans sa position de commutation, ouvre ce chemin d'écoulement de fluide sous pression supplémentaire.

6. Direction selon les revendications 3 et 5, dans laquelle la soupape de direction (28), dans les premières positions de travail (a), relie le deuxième raccordement de travail (A) au carter de fluide sous pression (T) et dans les deuxièmes positions de travail (b), relie le premier raccord de travail (B) au carter de fluide sous pression.

7. Direction selon là revendication 5 ou 6, dans laquelle la soupape de commutation (29) est disposée entre la soupape de direction (28) et le moteur de direction (6).

8. Direction selon les revendications 3 et 4, dans laquelle la soupape de blocage est une soupape de commutation à 2/2 voies (29), qui, dans sa position de blocage, bloque le chemin d'écoulement de fluide sous pression supplémentaire entre la source de fluide sous pression (P) et le moteur de direction (6) et, dans sa position de commutation (a), commande son ouverture, le fluide sous pression sortant du moteur de direction (6) s'écoulant par le biais de l'unité de direction (4) vers un carter de fluide sous pression (T).

9. Direction selon l'une quelconque des revendications précédentes, dans laquelle la soupape de blocage (29) est une soupape à siège.

10. Direction selon l'une quelconque des revendications précédentes, dans laquelle le dispositif d'enregistrement de la soupape de blocage (29) est un commutateur de fin de course (48).

11. Direction selon l'une quelconque des revendications précédentes, dans laquelle le dispositif d'enregistrement de la soupape de direction (28) est un capteur de déplacement (38).
